**Europäisches Patentamt**

**European Patent Office**

**Office européen des brevets**

⑩

(11) Publication number: **0 127 821**
**B1**

(12) **EUROPEAN PATENT SPECIFICATION**

(45) Date of publication of patent specification: **27.04.88**

(21) Application number: **84105660.9**

(22) Date of filing: **18.05.84**

(51) Int. Cl.⁴: **C 03 C 3/089,** C 03 C 4/02,
C 03 C 4/08

(54) **Contrast enhancing CRT filters and fusible filter faceplates.**

(30) Priority: **31.05.83 US 499686**

(43) Date of publication of application:
**12.12.84 Bulletin 84/50**

(45) Publication of the grant of the patent:
**27.04.88 Bulletin 88/17**

(84) Designated Contracting States:
**DE FR GB**

(56) References cited:
**DE-A-3 135 910**
**GB-A-2 115 403**
**US-A-2 378 769**
**US-A-4 349 692**

**APPLIED OPTICS, vol. 16, no. 7, July 1977,**
**pages 1908-1913; M.A. RES et al.: "Bandpass**
**filters for use in the visible region"**

(73) Proprietor: **Schott Glass Technologies, Inc.**
**400 York Avenue**
**Duryea Pennsylvania 18642 (US)**

(72) Inventor: **Mader, Karl-Heinz**
**103 Northern Spy Road R.D. Nr. 4, Box 335**
**Clarks Summit Pennsylvania 18411 (US)**
Inventor: **Kassner, Reinhard**
**Kalandstrasse 1A**
**D-3220 Alfeld/Leine (DE)**

(74) Representative: **Schmitz, Waldemar, Dipl.-Phys.**
**Schmitz + Rasper Patentanwälte Lessingstrasse**
**10**
**D-6200 Wiesbaden (DE)**

## Description

Background of the invention

This invention relates to a new glass composition useful for fabrication of contrast enhancement filters and filter glasses.

Contrast enhancement filters are widely used with Phosphor P-43 CRT's to improve signal visibility at approximately 546 nm. It is preferred that such bandpass filters have narrow bandwidths and transmittance peaks at 546 nm of about 5—30%, depending on end use and user preferences. This peak wavelength lies approximately at the main emission of P-43.

Various glasses meeting these requirements have been proposed, e.g. the glasses of US—A—4,288,250; Weyl, colored Glasses, Society of Glass Technology, Sheffield 1978, pages 78—79 and 221—229, US—A—2 378 769 and Applied Optics Vol. 16, No. 7, July 1977, pages 1908—1913. However, none of the glasses disclosed in these references show a narrow bandwidth and a single transmission peak at about 546 nm.

Summary of the invention

Accordingly, it is an object of this invention to provide improved contrast enhancement filters and faceplate glasses having a transmission peak centered at about 546 nm with a narrow bandwidth.

Upon further study of the specification and appended claims, further objects and advantages of this invention will become apparent to those skilled in the art.

These objects have been attained by providing a glass of the following composition:

|  | Wt. % | Preferred |
|---|---|---|
| $SiO_2$ | 60—70 | 62—65 |
| $B_2O_3$ | 1—3 | 1.3—1.7 |
| $Al_2O_3$ | 0—1 | 0.3—0.7 |
| $Li_2O$ | 1—3 | 1—3 |
| $Na_2O$ | 3—10 | 4.8—6.7 |
| $K_2O$ | 5—10 | 6—7 |
| BaO | 3—7 | 5—6 |
| SrO | 3—10 | 4—9.5 |
| PbO | 0—3 | 2—3 |
| $CeO_2$ | 0—3 | 0 |
| CaO | 0—10 | 0 |
| $Cr_2O_3$ | 0.1—3 | 0.7—3 |
| $Nd_2O_3$ | 0—10 | 0—6 |
| CuO | 0.1—1 | 0.1—1 |

Optionally, there can also be included conventional refining agents in the conventional amounts, e.g.,

|  | Wt. % | Preferred |
|---|---|---|
| $F_2$ | 0—0.4 | 0.2—0.4 |
| $As_2O_3$ | 0—0.4 | 0.1—0.3 |
| $Sb_2O_3$ | 0—0.4 | 0.2—0.4 |
| $Cl_2$ | 0—0.3 | 0 |
| $Na_2SO_4$ | 0—0.4 | 0 |

Brief description of the drawing

Various other objects, features and attendant advantages of the present invention will be more fully appreciated as the same becomes better understood when considered in conjunction with the accompanying drawing, wherein:

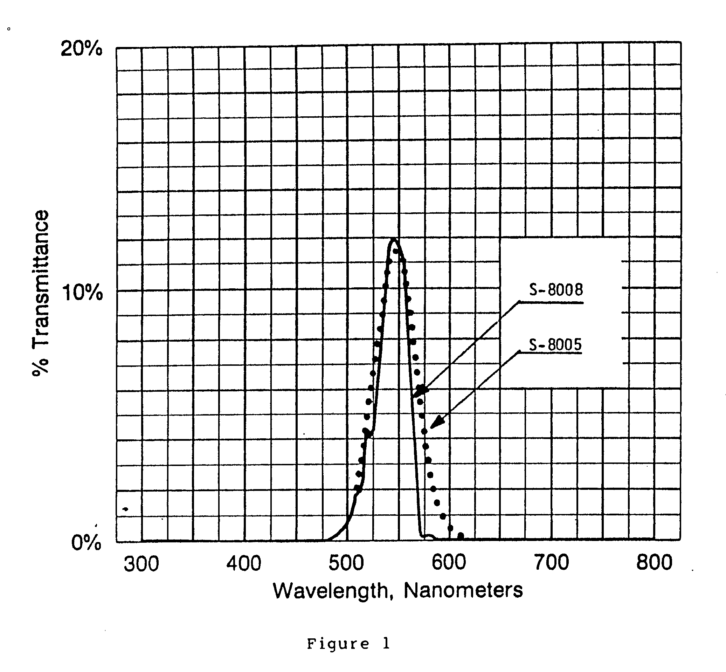

Figure 1 shows the transmittance spectra of two of the glass compositions of this invention.

Detailed discussion

Typically, the glasses of this invention have the following properties:

|  | Range |
|---|---|
| Refractive Index ($n_D$) | 1.530—1.552 |
| Peak Location (nm) | 540—550 |
| Transmittance at Peak (T) (%) | 5—30 depending on thickness |
| Bandwidth at T/2 (nm) | 20—50 |
| CTE (coefficient of thermal expansion) 20—300°C ($°C^{-1}$) | $(90—105) \times 10^{-7}$ |
| Tg(°C) | 450—500 |
| Littleton Softening Point (°C) | 630—700 |
| Working Point (°C) | 910—1000 |

The predominant ingredient, 60—70 wt.%, is $SiO_2$. It provides the basic glass structure, modified by other ingredients. Exceeding 70% $SiO_2$ tends to make manufacturing difficult by increasing the viscosity. Too little silica degrades the chemical durability of the glass and may have other deleterious effects, depending on the other ingredients.

The alkali metal oxides ($Li_2O$, $Na_2O$, $K_2O$) comprise 9—23% of the glass. These oxides lower the melting temperature to a convenient range. Excessive alkali metal oxide degrades chemical durability, a property important for efficient, trouble-free fabrication of parts from the cold glass. Too little alkali metal oxide makes the melting and forming temperatures inconveniently high.

Alkaline earth metal oxides (BaO, SrO, CaO) comprise 6—27% of the glass. The alkaline earths provide a number of benefits such as increased resistance to chemical corrosion, shielding from x-rays, and a high refractive index. Excessive amounts of alkaline earths cause crystallization that spoils the transparency of the glass.

The ingredients $F_2$, $Cl_2$, $As_2O_3$, $Sb_2O_3$ and $Na_2SO_4$, while present in only minor amounts (0—2.5 wt.%), perform an essential function, the removal of bubbles from the molten glass. These chemicals must be present in suitable amounts and combination, to produce a glass sufficiently free from bubbles to be useful. This is an art fully conventional to those of skill in glass technology.

The other ingredients ($B_2O_3$, $Al_2O_3$, and PbO), present in 1—7 wt.%, give other useful properties such as improved viscosity for forming, increased resistance to crystallization, and increased refractive index. Deviation from the specified ranges degrades one or more useful properties of the glass.

The colorants ($Cr_2O_3$, $Nd_2O_3$, and CuO), which comprise 0.2—14 wt% of the glass, provide the contrast enhancing property. If too little colorant is present, the glass will not enhance the contrast of a CRT. If too much colorant is present, the glass will be too dark to permit convenient reading of the information on the screen of the CRT. The amount of each colorant is determined partly by the thickness of the glass and partly by the special needs and preferences of the user. This can be readily achieved by fully conventional considerations, perhaps with a few preliminary experiments.

Typical examples of the transmission spectra, which describe the effect of the colorants, are given in Figure 1. For a glass which contains 2.82 wt.% of $Cr_2O_3$, 0.60 wt.% of CuO and no $Nd_2O_3$, and otherwise substantially corresponding to the composition of S-8005 defined herein, a 2.80 mm thick filter has a transmission maximum of 11.5% at 550 nm and with a halfwidth of 44 nm. The P-43 phosphor, which has a narrow emission band at 544 nm, is transmitted by this filter. Ambient light far from 544 nm, for example at 450 or 650 nm, is almost completely absorbed by the filter. Ambient light at wavelengths closer to the transmission maximum, for example at 525 nm, is also strongly attenuated since it passes through the filter twice: once in going from the ambient space to the CRT screen where it is diffusely reflected and a second time when the diffusely-reflected light travels through the filter toward the observer. The brightness of this scattered light can further be reduced by making the transmission band narrower. A narrower band is achieved by adding $Nd_2O_3$ to the glass. For example, glass S-8008, which has 4.95 wt.% of $Nd_2O_3$ in addition to 1.72 wt.% of $Cr_2O_3$ and 0.54 wt.% of CuO, has a transmission band with a maximum of 12% at 544 nm and a half-width of 33 nm when 3.5 mm thick. Figure 1 shows how the presence of $Nd_2O_3$ has narrowed the transmission band.

The glasses of this invention have transmission peaks centered near 546 nm which is approximately at the main emission of P-43. Furthermore, the faceplate glass of this invention is fusible to glasses commonly known as G-12 funnel glass and has similar or identical spectral transmittance properties. Typical G-12 glass includes glass 0120 made by Corning Glass Works and glass GW12 made by Wertheim. All glasses of this invention provide good x-ray absorbance properties, e.g., comparable to those of conventional clear CRT faceplate glasses such as Schott Optical S-8003.

The basic difference between the properties of filters and faceplates is that the latter can be fused to G-12 funnel glass to make a CRT. Successful fusion requires that the thermal expansion coefficient be reduced from about $100 \times 10^{-7}°C^{-1}$ for the filters to about $91 \times 10^{-7}°C^{-1}$ for the faceplates. This decrease is achieved primarily by increasing the $SiO_2$ content by 1—3 wt.% and decreasing the alkali metal oxide content, especially the $Li_2O$, by 1—2%. Minor changes in some of the other ingredients which might be necessary to maintain other useful properties, of course, will also be made as is fully conventional.

The glass of this invention can be prepared using fully conventional techniques normally employed for glasses of this type. For example, the usual raw materials corresponding to the oxides required in the glasses of this invention, e.g., oxides per se, carbonates, nitrates, hydroxides, etc., are blended into a melt in amounts corresponding to the amounts desired in the final glass. Typical melting temperatures are 1200—1400°C. conventional crucibles or tanks, e.g., ceramic or platinum containers, can be used. The homogeneous melt is then further treated conventionally, e.g., refined, casted into molds, gradually cooled, etc.

Without further elaboration, it is believed that one skilled in the art can, using the preceding description, utilize the present invention to its fullest extent. The following preferred specific embodiments are, therefore, to be construed as merely illustrative, and not limitative of the remainder of the disclosure in any way whatsoever. In the following examples, all temperatures are set forth uncorrected in degrees Celsius; unless otherwise indicated, all parts and percentages are by weight.

Example 1

The following describes the preparation of the glass designated below as S-8005. Corresponding procedures were used to prepare the other glass compositions summarized in the following tables.

Preparation of S-8005

The following batch materials are weighed and then mixed thoroughly:

| Batch material | Amount (kg) |
|---|---|
| quartz powder | 160.37 |
| $B(OH)_3$ | 6.64 |
| $Al(OH)_3$ | 1.94 |
| sodium silica fluorides | 1.24 |
| $Li_2CO_3$ | 15.52 |
| $Na_2CO_3$ | 19.55 |
| $Na_2NO_3$ | 3.42 |
| $K_2CO_3$ | 23.91 |
| $Sr(NO_3)_2$ | 47.13 |
| $Ba(CO_3)$ | 17.41 |
| red lead oxide | 6.38 |
| sodium bichromate | 14.21 |
| black copper oxide | 1.55 |
| $As_2O_3$ | 0.50 |
| $Sb_2O_3$ | 0.75 |

The mixture is placed in a container and transported to the melting facility. In this case the melting facility is a continuously operating glass tank whose interior is lined partly with standard, commercially available alumina-zirconia-silica fused-cast refractory and partly with platinum. The mixed batch is placed in the furnace a little at a time along with an appropriate amount (typically 0—50%) of cullet, glass unsuitable for finished parts but suitable for remelting. The batch and cullet are placed on top of the molten glass within the tank at a temperature of 1200—1400°C. This material melts and mixes with the other glass in the tank. A stream of molten glass is withdrawn from near the bottom of the tank. This stream flows through a platinum-lined system in which it is heated to 1400—1500°C to remove gases, is stirred to increase homogeneity, and is delivered to a forming machine which produces the desired shape. The hot, rigid glass is then cooled slowly in a long furnace, a lehr, to reduce the strain to a level suitable for cutting and grinding.

This description is illustrative only and is not intended to restrict in any way the scope of this invention. It will be appreciated by anyone skilled in the art of glass making that the procedure of preparation can be varied widely and still produce an acceptable glass. For example, the kinds and amounts of raw materials mixed can be varied, the melting facility can be an all-platinum, intermittently-operated pot, a day tank, or many other kinds of facilities, and the temperatures in the facility can be varied considerably. In all such cases, suitable glass can be made by one skilled in the art.

Exemplary glass of this invention
1. Filters S-8005 and S-8008

| | Compositions in weight percent | |
|---|---|---|
| | S-8005 | S-8008 |
| $SiO_2$ | 62.30 | 63.05 |
| $B_2O_3$ | 1.45 | 1.50 |
| $Al_2O_3$ | 0.50 | 0.50 |
| $Li_2O$ | 2.45 | 2.45 |
| $Na_2O$ | 6.20 | 6.30 |
| $K_2O$ | 6.35 | 6.40 |
| $BaO$ | 5.15 | 5.20 |
| $SrO$ | 8.95 | 4.15 |
| $PbO$ | 2.45 | 2.45 |
| $F_2$ | 0.30 | 0.30 |
| $As_2O_3$ | 0.20 | 0.20 |
| $Sb_2O_3$ | 0.30 | 0.30 |
| $Cr_2O_3$ | 2.82 | 1.72 |
| $Nd_2O_3$ | — | 4.95 |
| $CuO$ | 0.60 | 0.54 |
| | 100.02 | 100.01 |

4

| Properties | S-8005 | S-8008 |
|---|---|---|
| Refractive Index $n_D$ | 1.547 | 1.546 |
| Peak Location (nm) | 546 | 546 |
| Transmittance at Peak (%) | 11.5 | 11.5 |
| Bandwidth at T/2 (nm) | <45 | <35 |
| Nominal Thickness (mm) | 2.5 | 3.5 |
| CTE 20—300°C ($°C^{-1}$) | 101 | 100 |
| Tg (°C) | 463 | 464 |
| Littleton Softening Point (°C) | 646 | 645 |
| Working Point (°C) | 926 | 932 |

2. Faceplates S-8006 and S-8006W

Compositions in weight percent

| | S-8006 | S-8006W |
|---|---|---|
| $SiO_2$ | 64.80 | 64.10 |
| $B_2O_3$ | 1.50 | 1.45 |
| $Al_2O_3$ | 0.50 | 0.50 |
| $Li_2O$ | 1.20 | 1.20 |
| $Na_2O$ | 5.95 | 5.95 |
| $K_2O$ | 6.45 | 6.40 |
| BaO | 5.25 | 5.40 |
| SrO | 9.15 | 5.50 |
| PbO | 2.80 | 2.75 |
| $F_2$ | 0.30 | 0.30 |
| $As_2O_3$ | 0.20 | 0.20 |
| $Sb_2O_3$ | 0.30 | 0.30 |
| $Cr_2O_3$ | 1.34 | 0.91 |
| $Nd_2O_3$ | — | 4.90 |
| CuO | 0.27 | 0.20 |
| $CeO_2$ | — | — |
| | 100.01 | 100.00 |

| Properties | S-8006 | S-8006W |
|---|---|---|
| Refractive Index $n_D$ | 1.536 | 1.539 |
| Peak Location (nm) | 546 | 546 |
| Transmittance at Peak (%) | 12.5 | 15 |
| Bandwidth at T/2 (nm) | <45 | <35 |
| Nominal Thickness (mm) | 5.3 | 7.0 |
| CTE 20—300°C ($°C^{-1}$) | 91 | 92 |
| Tg (°C) | 485 | 478 |
| Littleton Softening Point (°C) | 677 | 680 |
| Working Point (°C) | 954 | 982 |

Both glasses are fusible to G-12 funnel glass.

The preceding examples can be repeated with similar success by substituting the generically or specifically described reactants and/or operating conditions of this invention for those used in the preceding examples.

5

**0 127 821**

**Claims**

1. A glass consisting essentially of:

| | Wt.% |
|---|---|
| $SiO_2$ | 60—70 |
| $B_2O_3$ | 1—3 |
| $Al_2O_3$ | 0—1 |
| $Li_2O$ | 1—3 |
| $Na_2O$ | 3—10 |
| $K_2O$ | 5—10 |
| BaO | 3—7 |
| SrO | 3—10 |
| PbO | 0—3 |
| $CeO_2$ | 0—3 |
| CaO | 0—10 |
| $Cr_2O_3$ | 0.1—3 |
| $Nd_2O_3$ | 0—10 |
| CuO | 0.1—1 |

2. A glass of claim 1 consisting essentially of

| | Wt.% |
|---|---|
| $SiO_2$ | 62—65 |
| $B_2O_3$ | 1.3—1.7 |
| $Al_2O_3$ | 0.3—0.7 |
| $Li_2O$ | 1—3 |
| $Na_2O$ | 4.8—6.7 |
| $K_2O$ | 6—7 |
| BaO | 5—6 |
| SrO | 4—9.5 |
| PbO | 2—3 |
| $Cr_2O_3$ | 0.7—3 |
| $Nd_2O_3$ | 0—6 |
| CuO | 0.1—1 |

3. A glass of claim 1 further consisting essentially of

| | Wt.% |
|---|---|
| $F_2$ | 0.2—0.4 |
| $As_2O_3$ | 0.1—0.3 |
| $Sb_2O_3$ | 0.2—0.4 |

4. In an enhancement contrast filter, the improvement wherein the filter comprises the glass of claim 1.

5. In a CRT faceplate, the improvement wherein the faceplate comprises the glass of claim 1.

**Patentansprüche**

1. Glas, dadurch gekennzeichnet, daß es im wesentlichen folgende Zusammensetzung (in Gew.-%) aufweist:

| | |
|---|---|
| $SiO_2$ | 60—70 |
| $B_2O_3$ | 1—3 |
| $Al_2O_3$ | 0—1 |
| $Li_2O$ | 1—3 |
| $Na_2O$ | 3—10 |
| $K_2O$ | 5—10 |
| BaO | 3—7 |
| SrO | 3—10 |
| PbO | 0—3 |
| $CeO_3$ | 0—3 |
| CaO | 0—10 |
| $Cr_2O_3$ | 0.1—3 |
| $Nd_2O_3$ | 0—10 |
| CuO | 0.1—1 |

2. Glas nach Anspruch 1, dadurch gekennzeichnet, daß es im wesentlichen folgende Zusammensetzung (in Gew.-%) aufweist:

| | |
|---|---|
| $SiO_2$ | 62—65 |
| $B_2O_3$ | 1.3—1.7 |
| $Al_2O_3$ | 0.3—0.7 |
| $Li_2O$ | 1—3 |
| $Na_2O$ | 4.8—6.7 |
| $K_2O$ | 6—7 |
| BaO | 5—6 |
| SrO | 4—9.5 |
| PbO | 2—3 |
| $Cr_2O_3$ | 0.7—3 |
| $Nd_2O_3$ | 0—6 |
| CuO | 0.1—1 |

3. Glas nach Anspruch 1, dadurch gekennzeichnet, daß es außerdem im wesentlichen folgende Bestandteile (in Gew.-%) aufweist:

| | |
|---|---|
| $F_2$ | 0,2—0,4 |
| $As_2O_3$ | 0,1—0,3 |
| $Sb_2O_3$ | 0,2—0,4 |

4. Kontrastverstärkungsfilter, dadurch gekennzeichnet, daß der Filter das Glas gemäß Anspruch 1 enthält.

5. Kathodenstrahlbildschirm-Vorderscheibe, dadurch gekennzeichnet, daß die Vorderscheibe das Glas gemäß Anspruch 1 enthält.

**Revendications**

1. Verre constitué essentiellement de

| | % en poids |
|---|---|
| $SiO_2$ | 60—70 |
| $B_2O_3$ | 1—3 |
| $Al_2O_3$ | 0—1 |
| $Li_2O$ | 1—3 |
| $Na_2O$ | 3—10 |
| $K_2O$ | 5—10 |
| BaO | 3—7 |
| SrO | 3—10 |
| PbO | 0—3 |
| $CeO_2$ | 0—3 |
| CaO | 0—10 |
| $Cr_2O_3$ | 0,1—3 |
| $Nd_2O_3$ | 0—10 |
| CuO | 0,1—1 |

2. Verre selon la revendication 1, constitué essentiellement de

| | % en poids |
|---|---|
| $SiO_2$ | 62—65 |
| $B_2O_3$ | 1,3—1,7 |
| $Al_2O_3$ | 0,3—0,7 |
| $Li_2O$ | 1—3 |
| $Na_2O$ | 4,8—6,7 |
| $K_2O$ | 6—7 |
| BaO | 5—6 |
| SrO | 4—9,5 |
| PbO | 2—3 |
| $Cr_2O_3$ | 0,7—3 |
| $Nd_2O_3$ | 0—6 |
| CuO | 0,1—1 |

3. Verre selon la revendication 1, constitué, en outre, essentiellement de

| | % en poids |
|---|---|
| $F_2$ | 0,2—0,4 |
| $As_2O_3$ | 0,1—0,3 |
| $Sb_2O_3$ | 0,2—0,4 |

4. Dans un verre pour améliorer le contraste, le perfectionnement qui consiste en ce que le filtre est constitué du verre selon la revendication 1.

5. Dans un fond ou écran de tube cathodique, le perfectionnement qui consiste en ce que le fond est constitué du verre selon la revendication 1.

Figure 1